Europäisches Patentamt

European Patent Office

Office européen des brevets

(11) Veröffentlichungsnummer: **0 518 419 A2**

# EUROPÄISCHE PATENTANMELDUNG

(21) Anmeldenummer: **92201608.4**

(51) Int. Cl.⁵: **H04N 7/137**

(22) Anmeldetag: **04.06.92**

(30) Priorität: **08.06.91 DE 4118984**

(43) Veröffentlichungstag der Anmeldung:
**16.12.92 Patentblatt 92/51**

(84) Benannte Vertragsstaaten:
**AT CH DE DK ES FR LI**

(71) Anmelder: **Philips Patentverwaltung GmbH
Wendenstrasse 35 Postfach 10 51 49
W-2000 Hamburg 1(DE)**
㊳ **DE**

(71) Anmelder: **N.V. Philips' Gloeilampenfabrieken
Groenewoudseweg 1
NL-5621 BA Eindhoven(NL)**

㊳ **CH DK ES FR LI AT**

(72) Erfinder: **Zhang, Wenjun, Dr.
c/o Philips Patentverwaltung GmbH,
Wendenstr. 35
W-2000 Hamburg 1(DE)**
Erfinder: **Wenger, Jean
c/o Philips Patentverwaltung GmbH,
Wendenstr. 35
W-2000 Hamburg 1(DE)**

(74) Vertreter: **Peuckert, Hermann, Dipl.-Ing. et al
Philips Patentverwaltung GmbH
Wendenstrasse 35 Postfach 10 51 49
W-2000 Hamburg 1(DE)**

(54) Einrichtung zur Übertragung eines Farbfernsehsignals.

㊼ 2.1. Die Erfindung betrifft eine Einrichtung zur Übertragung eines mit einer vorgebbaren Abtastfrequenz abgetasteten Farbfernsehsignals (E1) mit einem sendeseitig angeordneten DPCM-Coder (1) und einem empfangsseitig angeordneten DPCM-Decoder (2), wobei der DPCM-Coder (1) und der DPCM-Decoder (2) jeweils einen Schätzwertbildner (7, 10) mit mindestens einem sein Eingangssignal um jeweils eine Abtastperiode (1T..6T) der Abtastfrequenz verzögernden Verzögerungsglied (9) aufweist. Dabei soll die Übertragung des Farbfernsehsignals über eine Übertragungskanal mit einer vorgegebenen begrenzten Nutzbandbreite ermöglicht werden.

2.2. Hierzu wird vorgeschlagen, daß das Produkt aus der Phasendifferenz (d) einer Abtastperiode (1T..6T) und einer vorgebbaren ganzen Zahl in etwa ein ganzzahliges Vielfaches einer Periode (P) der Farbträgerfrequenz (ft) des Farbfernsehsignals (E1) ergibt, wobei die vorgebbare ganze Zahl die Anzahl der Verzögerungsglieder (9) des Schätzwertbildners (7, 10) des DPCM-Coders (1) und des DPCM-Decoders (2) kennzeichnet.

2.3. Übertragung vom DPCM-Farbfernsehsignalen.

FIG.1

Die Erfindung betrifft eine Einrichtung zur Übertragung eines mit einer vorgebbaren Abtastfrequenz abgetasteten Farbfernsehsignals mit einem sendeseitig angeordneten DPCM-Coder und einem empfangsseitig angeordneten DPCM-Decoder, wobei der DPCM-Coder und der DPCM-Decoder jeweils einen Schätzwertbildner mit mindestens einem sein Eingangssignal um jeweils eine Abtastperiode der Abtastfrequenz verzögernden Verzögerungsglied aufweist.

Die Erfindung betrifft außerdem einen DPCM-Coder bzw. einen DPCM-Decoder.

Zur Übertragung eines abgetasteten Farbfernsehsignals, d.h. eines Farbfernsehsignals in digitaler Form ist eine relativ hohe Übertragungsrate von beispielsweise 100 bis 120 MBit/s notwendig. DPCM (Differentielle Puls-Code-Modulation) dient der Verminderung dieser Übertragungsrate. Das Grundprinzip basiert dabei auf folgender Überlegung: In einem Farbfernsehsignal ist eine relativ hohe Korrelation zwischen der Information benachbarter Abtastwerte vorhanden. Aus diesem Grunde wird lediglich jeweils die Differenz zwischen den jeweiligen Abtastwerten und einem sogenannten Schätzwert übertragen, der auf zeitlich zurückliegenden Abtastwerten basiert. Dabei arbeiten der DPCM-Coder und der DPCM-Decoder jeweils nach der gleichen Schätzwertbildung, so daß der übertragene Abtastwert des Farbfernsehsignals empfangsseitig durch das Hinzufügen der übertragenen Differenz zum jeweiligen Schätzwert wiedergewonnen werden kann.

Aus DE-A 37 38 851 ist eine Einrichtung der eingangs genannten Art bekannt, die insbesondere der Übertragung von PAL-Farbfernsehsignalen dient. Dabei beträgt die Abtastfrequenz des Farbfernsehsignals ein ganzzahliges Vielfaches der PAL-Farbträgerfrequenz. So wird beim Ausführungsbeispiel der DE-A 37 38 851 als Abtastfrequenz die dreifache Farbträgerfrequenz, d.h. 3 x 4,433 MHz = 13,3 MHz verwendet. Der Schätzwertbildner basiert auf der sogenannten 3T-Prädiktion, d.h. der Schätzwertbildner weist drei in Reihe geschaltete Verzögerungsglieder auf, wobei als Schätzwert das Ausgangssignal am Ausgang des dritten Verzögerungsgliedes verwendet wird. Zur Übertragung von NTSC-Farbfernsehsignalen wird als Schätzwert das Ausgangssignal eines in Reihe zu den für die PAL-Übertragung bereits vorgesehenen Verzögerungsgliedern zusätzlichen vierten Verzögerungsgliedes verwendet.

Der Erfindung liegt die Aufgabe zugrunde, mit einer Einrichtung der eingangs genannten Art die Übertragung des Farbfernsehsignals über einen Übertragungskanal mit einer vorgegebenen begrenzten Nutzbandbreite zu ermöglichen.

Diese Aufgabe wird bei einer Einrichtung der eingangs genannten Art dadurch gelöst, daß das Produkt aus der Phasendifferenz einer Abtastperiode und einer vorgebbaren ganzen Zahl in etwa ein ganzzahliges Vielfaches einer Periode der Farbträgerfrequenz des Farbfernsehsignals ergibt, wobei die vorgebbare ganze Zahl die Anzahl der Verzögerungsglieder des Schätzwertbildners des DPCM-Coders und des DPCM-Decoders kennzeichnet.

Die Erfindung geht dabei von der Erkenntnis aus, daß es für die Übertragung eines Farbfernsehsignals über einen Übertragungskanal mit fest vorgegebener Nutzbandbreite (= Nutzbitrate), wie dies bei der Vorgabe eines Übertragungskanals mit 70 MBit/s Nutzbandbreite beispielsweise zur Übertragung von Farbfernsehsignalen mit Stereo-Begleittönen der Fall sein kann, notwendig wird, eine bisher übliche Abtastfrequenz von beispielsweise der dreifachen Farbträgerfrequenz des Farbfernsehsignals zu reduzieren. Hierdurch wird es notwendig, daß die Abtastfrequenz im Gegensatz zu bisher bekannten Einrichtungen kein ganzzahliges Vielfaches der Farbträgerfrequenz beträgt, was zur Folge hat, daß eine bisher verwendete beispielsweise auf der 3T-Prädiktion basierende Schätzwertbildung erhebliche Qualitätsverluste des übertragenen Farbfernsehsignals aufweist. Beträgt nun die Abtastfrequenz insbesondere kein ganzzahliges Vielfaches, so wird die Anzahl der Verzögerungsglieder der Schätzwertbildner des DPCM-Coders bzw. des DPCM-Decoders erfindungsgemäß so bestimmt, daß das Produkt aus der Phasendifferenz zwischen zwei Abtastwerten und der Anzahl der Verzögerungsglieder ein ganzzahliges Vielfaches einer Periode der Farbträgerfrequenz ergibt. Hierdurch ergibt sich eine annähernd identische Phasenlage der Farbträgerfrequenz eines vom Schätzwertbildner erzeugten Schätzwertes und eines zugehörigen PCM-Signalwertes und somit trotz einer Abtastfrequenz mit einem nicht ganzzahligen Vielfachen der Farbträgerfrequenz eine qualitativ hochwertige Übertragung eines Farbfernsehsignals.

Eine annähernd identische Phasenlage der Farbträgerfrequenz des Schätzwertes eines PAL-Signals und eines zugehörigen PCM-Signalwertes ergibt sich dadurch, daß die Abtastfrequenz das 2,5-fache der Farbträgerfrequenz beträgt und die Schätzwertbildner jeweils fünf Verzögerungsglieder aufweisen. Die Schätzwertbildner basieren damit auf der sogenannten 5 T-Prädiktion, d.h. die Schätzwertbildner weisen jeweils fünf in Reihe geschaltete Verzögerungsglieder auf, wobei als Schätzwert das Ausgangssignal am Ausgang des fünften Verzögerungsgliedes verwendet wird. Mit einer Abtastfrequenz von 11,125 MBit/s, was dem 2,5-fachen der Farbträgerfrequenz von 4,433 MHz entspricht und einem Schätzwertbildner von jeweils fünf Verzögerungsgliedern für den DPCM-Coder sowie den DPCM-Decoder, wird die Übertragung eines PAL-Farbfernsehsignals mit einem vorgegebenen Übertragungskanal von 70 MBit/s Nutzbandbreite ohne Qualitätsverluste ermöglicht, wobei auch die Stereo-Begleittöne mitübertragen werden. Damit ist bei einem zur Verfügung stehenden 140 MBit/s Übertragungskanal die Übertragung von zwei derartigen PAL-Fernsehsignalen möglich.

Eine optimale Schätzwertbildung auch bei Luminanzsprüngen des Farbfernsehsignals wird dadurch gewährleistet, daß der Schätzwertbildner zur Bildung des Schätzwertes jeweils aus der Summe eines um fünf Abtastperioden verzögerten Abtastwertes und aus der Differenz eines um eine Abtastperiode verzögerten Abtastwertes und eines um sechs Abtastperioden verzögerten Abtastwertes vorgesehen ist. Eine derartige Schätzwertbildung bringt zudem keine wesentliche Verminderung der Übertragungsqualität für die Farbinformation mit sich.

Ein gutes Verhalten des Schätzwerts sowohl im Hinblick auf die Farbinformation als auch im Hinblick auf die Luminanz ergibt sich dadurch, daß der Schätzwertbildner zur Bildung des Schätzwertes aus einem um eine Abtastperiode verzögerten Abtastwert beim Auftreten von Signalsprüngen des Farbfernsehsignals vorgesehen ist. Dabei ist im ungestörten Fall, d.h. solange kein Signalsprung auftritt, die 5 T-Prädiktion aktiv und als Schätzwert wird das Ausgangssignal am Ausgang des fünften Verzögerungsgliedes verwendet. Erfolgt hingegen ein Signalsprung, so wird während der Dauer des Sprungs auf eine 1 T-Prädiktion umgeschaltet, d.h. als Schätzwert wird das Ausgangssignal am Ausgang des ersten Verzögerungsgliedes verwendet.

Im folgenden wird die Erfindung anhand der in den Figuren dargestellten Ausführungsbeispiele näher erläutert. Es zeigen:

Fig. 1 eine Einrichtung zur Übertragung eines Farbfernsehsignals mit einem DPCM-Coder und einem DPCM-Decoder,

Fig. 2 ein Ausführungsbeispiel eines DPCM-Coders mit 5 T-Prädiktion,

Fig. 3 ein Ausführungsbeispiel eines DPCM-Decoders mit 5 T-Prädiktion,

Fig. 4 ein Ausführungsbeispiel eines DPCM-Coders mit einer 1 T + 5 T - 6 T-Prädikton,

Fig. 5 ein Ausführungsbeispiel eines DPCM-Decoders mit einer 1 T + 5 T - 6 T-Prädiktion,

Fig. 6 den zeitlichen Verlauf der Abtastfrequenz eines Farbfernsehsignals,

Fig. 7 ein Ausführungsbeispiel eines DPCM-Coders mit einer adaptiven 1 T/5 T-Prädiktion,

Fig. 8 ein Ausführungsbeispiel eines DPCM-Decoders mit einer adaptiven 1 T/5 T-Prädiktion.

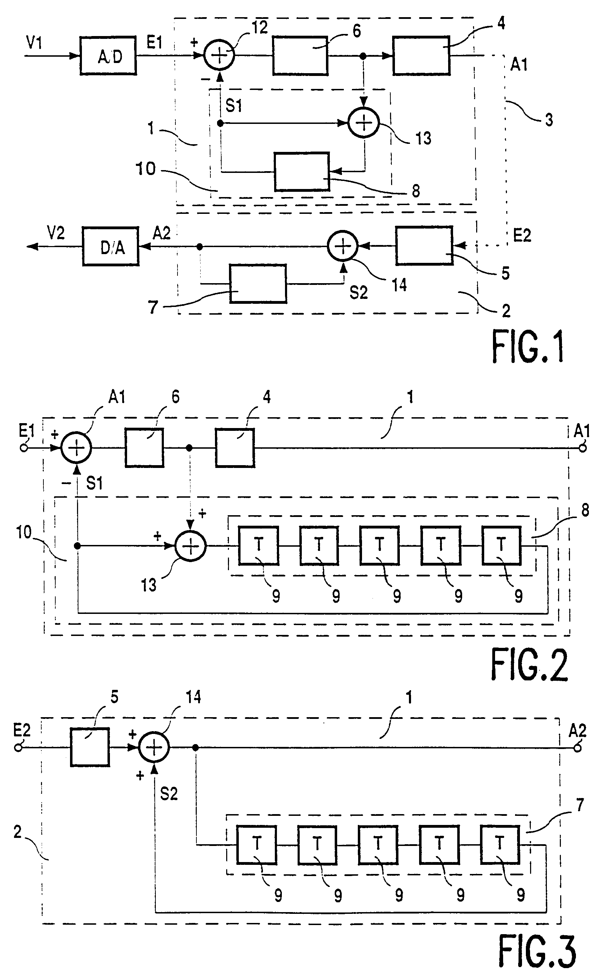

Das in Fig. 1 dargestellte Blockschaltbild zeigt das Grundprinzip einer DPCM-Übertragung. Dazu wird ein Farb-Fernsehsignal V1 zunächst einem Analog-Digital-Wandler A/D zugeführt. Ein Ausgangssignal E1 des Analog-Digital-Wandlers A/D bildet das Eingangssignal eines DPCM-Coders 1. Dazu wird das digitalisierte Farbfernsehsignal E1 zunächst einem Addierer 12 zugeführt, der jeweils die Differenz aus den Abtastwerten des Signals E1 und einem Schätzwert S1 bildet. Anschließend wird das Ausgangssignal des Addierers 12 in einem Quantisierer 6 quantisiert und in einem Codierer 4 codiert. Am Ausgang des Codierers 4 liegt dann ein Ausgangssignal A1, welches über einen Übertragungskanal 3 übertragen wird und dort als Signal E2 einem DPCM-Decoder 2 zugeführt wird. Das Signal am Ausgang des Quantisierers 6 wird zudem einem Schätzwertbildner 10 zugeführt, der den Schätzwert S1 liefert. Hierzu wird mittels eines Addierers 13 die Summe aus dem Schätzwert S1 und dem Signal am Ausgang des Quantisierers 6 gebildet. Zur Bildung des Schätzwertes S1 wird das Ausgangssignal des Addierers 13 einem Verzögerungsglied 9 zugeführt, an dessen Ausgang der Schätzwert S1 abgenommen wird. Der empfangsseitig angeordnete DPCM-Decoder 2 wird aus einem Decodierer 5 gebildet, dem das Empfangssignal E2 zugeführt wird. Aus dem Ausgangssignal des Decodierers 5 und einem Schätzwert S2 des DPCM-Decoders 2 wird mittels eines Addierers 14 ein Ausgangssignal A2 gebildet. Dieses wird in einem Digital-Analog-Wandler D/A wieder in ein analoges Ausgangssignal V2 umgewandelt.

Das in Fig. 1 dargestellte DPCM-Übertragungssystem ist beispielsweise in dem Aufsatz "A simple High Quality DPCM-Codec for Video Telephony Using 8 Mbit per Second" von G.B. Bostelmann in NTZ 1974, Heft 3, Seiten 115 bis 117 beschrieben. So wird das analoge Videosignal V1 zunächst in ein digitales Eingangssignal E1 für den DPCM-Coder 1 umgewandelt. Von diesem Eingangswert E1 wird der Schätzwert S1 des Schätzwertbildners 10 subtrahiert. Anschließend erfolgt eine Quantisierung, so daß nur die Differenzen quantisiert, im Kodierer 4 kodiert und über die Übertragungsstrecke 3 übertragen wird. Zur Bildung des Schätzwertes S1 wird das Ausgangssignal des Addierers 13, dem sowohl der Schätzwert S1 sowie das Ausgangssignal des Quantisierers 6 zugeführt werden, jeweils um einen Takt des Farbträgersignals verzögert. Auf der Empfangsseite erfolgt zunächst mit Hilfe des Dekodierers 5 eine Dekodierung des Eingangssignals E2. Anschließend erfolgt im DPCM-Decoder 2 eine Rekonstruktion des Ausgangssignals A2 durch die Addition des kodierten Eingangssignals E2 und des vom Schätzwertbildner 7 gelieferten Schätzwertes S2.

Der in Fig. 2 dargestellte DPCM-Coder 1 ist beispielsweise in dem in Fig. 1 dargestellten DPCM-Übertragungssystem einsetzbar, wobei analog dazu dann auch der in Fig. 3 dargestellte DPCM-Decoder 2 einzusetzen ist. Vom grundsätzlichen Aufbau her entspricht der in Fig. 2 dargestellte DPCM-Coder 1 dem bereits im Zusammenhang mit Fig. 1 beschriebenen DPCM-Coder. Im Gegensatz zu dem in Fig. 1 dargestellten Schätzwertbildner 10 weist der in Fig. 2 dargestellte Schätzwertbildner fünf Verzögerungsglieder 9 auf. Eine derartige Schätzwertbildung ist insbesondere dann vorteilhaft, wenn das Farbfernsehsignal E1 ein PAL-Signal mit einer Farbträgerfrequenz von 4,433 MHz und die Abtastfrequenz 11,125 MBit/s beträgt. In diesem Fall beträgt die Abtastfrequenz das 2,5-fache der Farbträgerfrequenz. Damit ergibt sich eine nahezu identische Farbträgerphasenlage des Schätzwertes und des aktuellen PCM-Wertes.

Fig. 3 zeigt den zu Fig. 2 zugehörigen DPCM-Decoder. Der Schätzwertbildner 7 des DPCM-Decoders 2 weist ebenfalls fünf Verzögerungsglieder 9 auf.

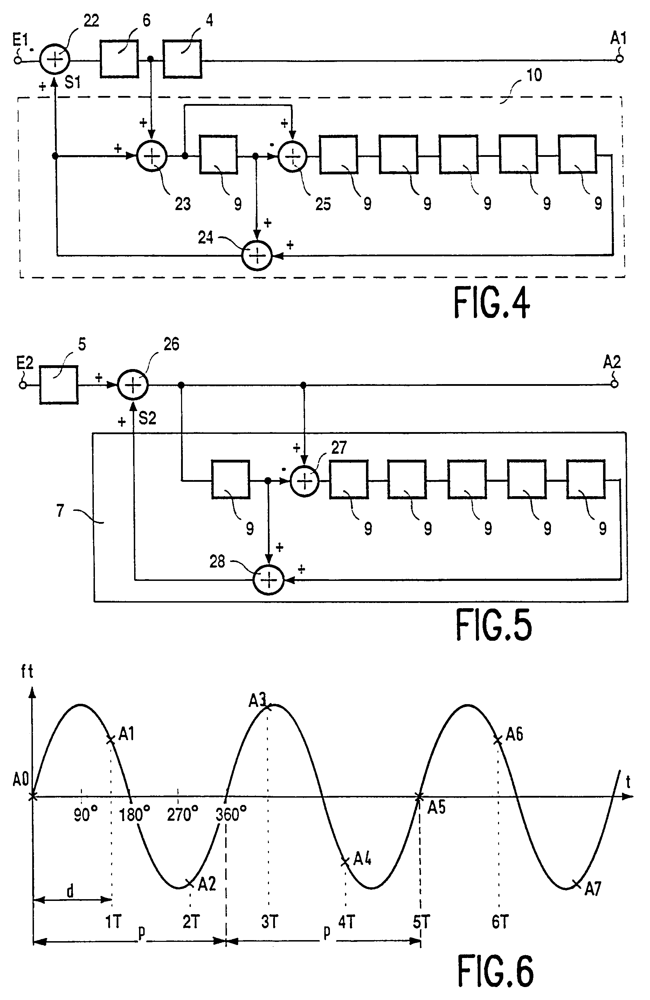

Fig. 4 zeigt ein Ausführungsbeispiel eines DPCM-Coders, der auf der 1 T + 5 T - 6 T Prädiktion beruht. Dabei wird das abgetastete digitalisierte Videosignal E1 zunächst einem Addierer 22 zugeführt, der jeweils die Differenz aus dem Abtastwert des Videosignals E1 und dem Schätzwert S1 bildet. Anschließend wird das Ausgangssignal des Addierers 22 in einem Quantisierer 6 quantisiert und in einem Kodierer 4 kodiert. Am Ausgang des Kodierers 4 liegt dann das Ausgangssignal A1. Das Signal am Ausgang des Quantisierers 6 wird außerdem dem Schätzwertbildner 10 zugeführt, der hieraus den Schätzwert S1 ermittelt. Hierzu wird mittels eines Addierers 23 die Summe aus dem Schätzwert S1 und dem Signal am Ausgang des Quantisierers 6 gebildet. Das Ausgangssignal des Addierers 23 wird einem Verzögerungsglied 9 sowie einem Addierer 25 zugeführt. Das Signal am Ausgang des Verzögerungsglieds 9 wird mittels des Addierers 25 vom Ausgangssignal des Addierers 23 subtrahiert. Dem Addierer 25 sind fünf weitere Verzögerungsglieder 9 nachgeschaltet, wobei dem Ausgangssignal mittels eines Addierers 24 mit dem Ausgangssignal des zwischen dem Addierer 23 und dem Addierer 25 eingeschalteten Verzögerungsgliedes 9 addiert wird. Am Ausgang des Addierers 24 liegt dann der Schätzwert S1 an.

Bei dem in Fig. 4 dargestellten Ausführungsbeispiel eines DPCM-Codes bildet der Schätzwertbildner 10 den Schätzwert S1 jeweils aus der Summe eines um fünf Abtastperioden verzögerten Abtastwertes und der Differenz aus einem um eine Abtastperiode und aus einem um sechs Abtastperiode verzögerten Abtastwertes. Eine derartige Schätzwertbildung beruht auf der Kenntnis, daß die reine 5T-Prädiktion nur einen optimalen Schätzwert für die Farbinformation ermöglicht, eine derartige Prädiktion jedoch bei Luminanzsprüngen nicht ideal ist. Eine Abhilfe hiergegen bildet die Berücksichtigung des um 1T und des um 6T verzögernden Signalwertes. Eine derartige 1T + 5T - 6T-Prädiktion verbessert das Verhalten bei Signalsprüngen.

Fig. 5 zeigt den zu Fig. 4 zugehörigen DPCM-Decoder 2. Der DPCM-Decoder 2 wird aus einem Decodierer gebildet, dem das Empfangssignal E2 zugeführt wird. Aus dem Ausgangssignal des Decodierers und einem Schätzwert S2 wird mittels eines Addierers 26 ein Ausgangssignal A2 gebildet. Zu der Schätzwertbildung wird das Signal am Ausgangs des Addierers 26 zunächst einem Verzögerungsglied 9 zugeführt, dessen Ausgangssignal von Ausgangssignal des Addierers 26 mittels des Addierers 27 subtrahiert wird. Dem Ausgang des Addierers 27 sind fünf weitere Verzögerungsglieder 9 nachgeschaltet, deren Ausgangssignal mit dem Ausgangssignal des ersten Verzögerungsgliedes 9 addiert wird. Am Ausgangs des Addierers 28 liegt der Schätzwert S2. Wie bereits erwähnt ist eine derartige Prädiktion besonders vorteilhaft bei Luminanzsprüngen des Farbfernsehsignals, ohne daß eine wesentliche Verminderung der Übertragungsqualität für die Farbinformation erfolgt.

Fig. 6 zeigt den Verlauf einer als Sinusfunktion dargestellten Farbträgerfrequenz ft eines PAL-Farbfernsehsignals als Funktion der Zeit -t. Eine Periode von 360° des Farbträgersignals ft ist mit P, die Abtastperioden sind mit 1T...6T und die zugehörigen Abtastwerte mit A0...A7 bezeichnet, wobei die Phasendifferenz einer Abtastperiode 1T...6T zwischen zwei Abtastwerten A0...A7 durch d gekennzeichnet ist. Da die Schätzwerte aus verzögerten Abtastwerten gewonnen werden, ist an der Zeitachse ein Minuszeichen (-t) eingetragen.

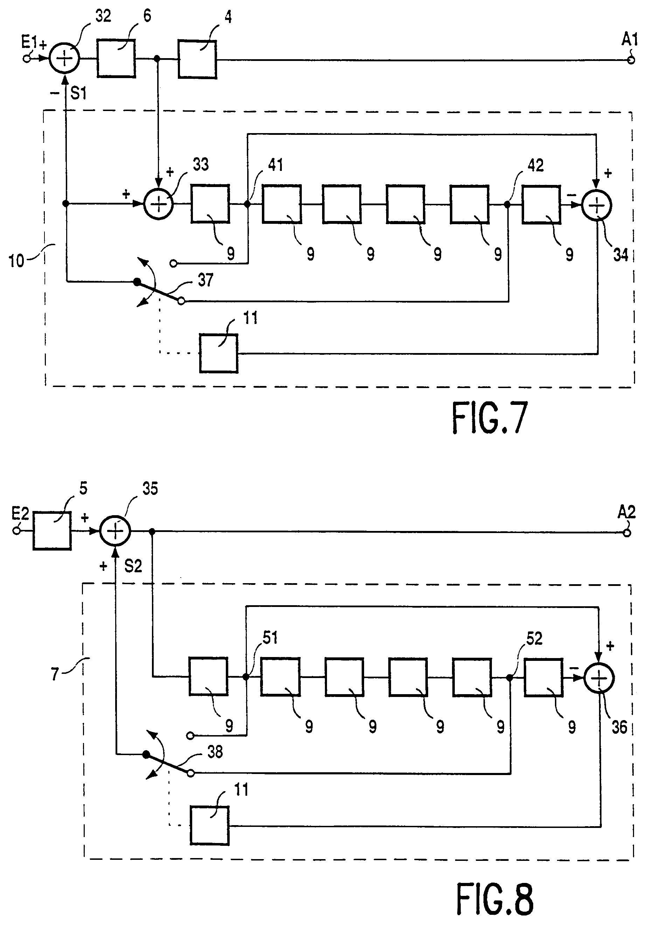

In Fig. 6 ist dargestellt, daß als reduzierte Abtastfrequenz das 2,5-fache der Farbträgerfrequenz (= 4,433 MHz) eines PAL-Farbfernsehsignals verwendet wird. Hierdurch ergibt sich für die Phasendifferenz d einer Abtastperiode 1T...6T zwischen zwei Abtastwerten A0...A7: $d = 360°/2,5 = 144°$, d.h. ein um fünf Abtastperioden 5T verzögerter Abtastwert A5 ist in etwa in Phase mit einer Periode P der Farbträgerfrequenz ft ($144° * 5 = 720° = 2 * P$). Aus diesem Grund weist der in den Fig. 2 und 3 dargestellte Schätzwertbildner des DPCM-Coders bzw. DPCM-Decoders jeweils fünf Verzögerungsglieder auf. Allgemein gilt, daß das Produkt aus einer Phasendifferenz d einer Abtastperiode 1T...6T zwischen zwei Abtastwerten A0...A7 und einer vorgebbaren ganzen Zahl in etwa ein ganzzahliges Vielfaches einer Periode P der Farbträgerfrequenz ft ergibt. Wie aus Fig. 6 ersichtlich, ergibt sich bei der 5T-Prädiktion, d.h. es wird der um 5T verzögerte rekonstruierte PCM-Wert als Schätzwert benutzt, eine nahezu identische Farbträger-Phasenlage des Schätzwerts und des aktuellen PCM-Werts. Wie bereits erwähnt, beträgt die Abtastfrequenz bei einem PAL-Signal vorteilhafterweise das 2,5-fache der Farbträgerfrequenz und die Schätzwertbildner weist jeweils fünf Verzögerungsglieder auf. Mit einer Abtastfrequenz von 11,125 Mbit/s, was dem 2,5-fachen der Farbträgerfrequenz von 4,433 MHz des PAL-Signals entspricht, und einem Schätzwertbildner von jeweils fünf Verzögerungsgliedern für den DPCM-Coder und den DPCM-Decoder wird so die Übertragung eines PAL-Stereo-Audio-Farbfernsehsignals in einem vorgegebenen Übertragungskanal von 70 Mbit/s Bandbreite ohne Qualitätsverluste möglich. Damit ist beispielsweise bei einer Videokonferenz-Übertragung bei einem zur Verfügung stehenden 140 Mbit/s Übertragungskanal die Übertragung von zwei Stereo-Audio-PAL-Farbfernsehsignalen möglich. Die fünf 5T-Prädiktion liefert jedoch nur optimale Schätzwerte für die Farbinformation und ist bei Luminanzsprüngen nicht ideal. Aus diesem Grund wird, wie in den Fig. 4 und 5 dargestellt ist, gegebenenfalls eine 1T+5T-6T-Prädiktion oder wie in den Fig. 7 und 8 angegeben ist, eine adaptive 1T/5T-Prädiktion verwendet.

Fig. 7 zeigt ein Ausführungsbeispiel eines DPCM-Coders mit einer adaptiven 1 T /5 T-Prädiktion, dazu wird zunächst wiederum mittels eines Addierers 32 Differenz zwischen dem Eingangssignal E1 und einem Schätzwert S1 gebildet. Anschließend erfolgt eine Quantisierung mittels des Quantisierers 6 sowie eine Kodierung mittels des Codierers 4. Zu Schätzwertbildung wird das Ausgangssignal des Quantisierers 6 mittels eines Addierers 33 mit dem Schätzwert S1 summiert, das Ausgangssignal des Addierers 33 wird einer Verzögerungs-Schaltung von sechs Verzögerungsgliedern 9 zugeführt, wobei nach dem ersten Verzögerungsglied ein Abgriff des Ausgangssignals des ersten Verzögerungsgliedes erfolgt. Dieses wird mittels eines Addierers 34 vom Ausgangssignal des letzten Verzögerungsgliedes subtrahiert. Darüberhinaus ist zwischen dem letzten und dem vorletzten Verzögerungsglied ein Abgriff vorgesehen. Das Signal am Ausgang des ersten Verzögerungsgliedes am Abgriff 41, sowie das Signal am Ausgang des vorletzten Verzögerungsgliedes am Abgriff 42 wird jeweils den Kontakten eines steuerbaren Schalters 37 zugeführt. Der steuerbare Schalter 37 wird in Abhängigkeit des Ausgangssignals eines Vergleichers 11 geschaltet, dem das Ausgangssignal des Addierers 34 zugeführt ist. Am Ausgangs des Schalters 37 liegt der Schätzwert S1 an.

Die Arbeitsweise des Schätzwertbildners 10 des in Fig. 7 dargestellten Ausführungsbeispiel erfolgt folgendermaßen. Solange kein Signalsprung auftritt, ist eine 5T-Prädiktion aktiv, d. h. die Schätzwertbildung basiert auf der 5 T-Prädiktion und der Schalter 37 befindet sich in der Fig. 7 dargestellten Stellung. Erfolgt entgegen ein Signalsprung, so wird während der Dauer des Sprungs auf eine 1T-Prädiktion umgeschaltet. Hierzu wird der Schalter 37 umgelegt und mit dem Abgriff 41 verbunden. Die Erkennung eines Signalsprungs erfolgt durch die Betrachtung der Differenz zwischen dem um 1 T und dem um 6 T verzögernden Rekonstruktionswert. Solange der Betrag der Differenz größer als ein definierter Wert ist, erfolgt eine 1 T-Prädiktion. Der Vorteil einer derartigen Prädiktion liegt in gutem Verhalten des Schätzwerts für die Farbinformation und für die Luminanz.

Fig. 8 zeigt den zu Fig. 7 zugehörigen DPCM-Decoder. Dabei wird das Empfangssignal E2 zunächst wiederum einem Dekodierer 5 zugeführt, dessen Ausgangssignal mittels eines Addierers 35 zum Schätzwert S2 addiert wird. Das Ausgangssignal des Addierers 35 wird zunächst einem ersten Verzögerungsglied 9 zugeführt, dem weitere fünf Verzögerungsglieder 9 nachgeschaltet sind. Das Signal nach dem ersten Verzögerungsglied 9 an einem Abgriff 51 wird mittels eines Addierers 36 vom Ausgangssignal des letzten Verzögerungsgliedes subtrahiert, wobei der Ausgang des Addierers 36 an einem Vergleicher 11 angeschlossen ist. Der Vergleicher 11 steuert einen steuerbaren Schalter 38, der sowohl mit dem Abgriff 51 nach dem ersten Vergleicher als mit dem Abgriff 52 vor dem letzen Vergleicher verbindbar ist. Am Ausgang des steuerbaren Schalters 38 liegt der Schätzwert S2. Die Funktion der adaptiven 1 T/5 T-Prädiktion erfolgt bei dem in Fig. 8 dargestellten DPCM-Decoder auf die im Zusammenhang mit Fig. 7 beschriebene Weise. Dabei ist, solange kein Signalsprung auftritt, eine 5 T-Prädiktion aktiv, während beim Auftritt eines Signalsprungs auf eine 1 T-Prädiktion umgeschaltet wird.

## Patentansprüche

1. Einrichtung zur Übertragung eines mit einer vorgebbaren Abtastfrequenz abgetasteten Farbfernsehsignals (E1) mit einem sendeseitig angeordneten DPCM-Coder (1) und einem empfangsseitig angeordneten DPCM-Decoder (2), wobei der DPCM-Coder (1) und der DPCM-Decoder (2) jeweils einen Schätzwertbildner (7, 10) mit mindestens einem sein Eingangssignal um jeweils eine Abtastperiode (1T..6T) der Abtastfrequenz verzögernden Verzögerungsglied (9) aufweist,
dadurch gekennzeichnet,
daß das Produkt aus der Phasendifferenz (d) einer Abtastperiode (1T..6T) und einer vorgebbaren ganzen Zahl in etwa ein ganzzahliges Vielfaches einer Periode (P) der Farbträgerfrequenz (ft) des Farbfernsehsignals (E1) ergibt, wobei die vorgebbare ganze Zahl die Anzahl der Verzögerungsglieder (9) des Schätzwertbildners (7, 10) des DPCM-Coders (1) und des DPCM-Decoders (2) kennzeichnet.

2. Einrichtung nach Anspruch 1,
dadurch gekennzeichnet,
daß die Abtastfrequenz das 2,5-fache der Farbträgerfrequenz (ft) beträgt und die Schätzwertbildner (7, 10) jeweils fünf Verzögerungsglieder (9) aufweisen.

3. Einrichtung nach einem der Ansprüche 1 oder 2,
dadurch gekennzeichnet,
daß der Schätzwertbildner (7, 10) zur Bildung des Schätzwertes (S1, S2) jeweils aus der Summe eines um fünf Abtastperioden (5T) verzögerten Abtastwertes (A5) und aus der Differenz eines um eine Abtastperiode (1T) verzögerten Abtastwertes (A1) und eines um sechs Abtastperioden (6T) verzögerten Abtastwertes (A6) vorgesehen ist.

4. Einrichtung nach einem der Ansprüche 1 bis 3,
dadurch gekennzeichnet,
daß der Schätzwertbildner (7, 10) zur Bildung des Schätzwertes (S1, S2) aus einem um eine Abtastperiode (1T) verzögerten Abtastwert (A1) beim Auftreten von Signalsprüngen des Farbfernsehsignals (E1) vorgesehen ist.

5. DPCM-Coder und/oder DPCM-Decoder für eine Einrichtung nach einem der Ansprüche 1 bis 4.

FIG.1

FIG.2

FIG.3

FIG.4

FIG.5

FIG.6

FIG.7

FIG.8